# EUROPÄISCHE PATENTANMELDUNG

(11) **EP 1 134 109 A2**
(43) Veröffentlichungstag der Anmeldung: **19.09.2001**
(21) Anmeldenummer: 01103295.0
(22) Anmeldetag: 13.02.2001
(51) Int. Cl.: B60K 41/04, F02D 41/02

(54) **Verfahren und Vorrichtung zur Antriebsstrangsteuerung im Zug- und Schubbetriebszustand**

(30) Priorität: 13.03.2000 DE 10012132
(71) Anmelder: ROBERT BOSCH GMBH, 70442 Stuttgart (DE)
(72) Erfinder: Mayer, Rainer, 71263 Weil Der Stadt (DE)

(57) **Zusammenfassung**

In modernen Antriebsstrangsteuerungen für Kraftfahrzeuge wird die Stellung des Fahrpedals elektronisch erfasst und in einer prozessorgesteuerten Schaltung ausgewertet, um einen Sollwert für das Antriebsmoment oder für die Antriebsleistung vorzugeben. Dabei ist der Fahrerwunsch möglichst optimal unter Berücksichtigung der konkreten Betriebsbedingungen zu interpretieren.

Die Erfindung schlägt ein Verfahren und eine Vorrichtung zu Steuerung des Antriebsstranges vor, bei der abhängig von der Stellung des Fahrpedals ein Eingangswert (PWG') zur Bildung eines Sollwerts (MD) ermittelt wird, der das Antriebsmoment für den Antriebsstrang vorgibt, wobei das Vorzeichen des Sollwerts (MD) angibt, ob der Antriebsstrang in einem Zugbetriebszustand oder in einem Schubbetriebszustand gesteuert wird, wobei mittels des Eingangswerts (PWG') für den Zugbetriebszustand gemäß einer ersten Funktion (ZF1) ein erster Zwischenwert (ZM1) und für den Schubbetriebszustand gemäß einer zweiten Funktion (SF) ein zweiter Zwischenwert (SM) ermittelt werden und anschließend mittels einer additiven Überlagerung (ADD) der beiden Zwischenwerte (ZM1, SM) der Sollwert (MD) für das Antriebsmoment gebildet wird.

Dadurch wird der Sollwert (MD) für das Antriebsmoment mittels einer einheitlichen, zusammengesetzten Gesamtfunktion (RF) berechnet, welche auch im Übergangsbereich zwischen Zug- und Schubbetrieb kontiniuierlich verläuft. Somit werden Unstetigkeiten im Momentenverlauf, insbesondere Momentesprünge, vermieden. Da die Gesamtfunktion (RF) aus zwei Funktionen (ZF1, SF) zusammengesetzt ist, kann der Momentenverlauf im jeweiligen Bereich sehr einfach und schnell an die Betriebsbedingungen im Zugbetrieb bzw. Schubbetrieb optimal angepasst werden. Die Erfindung kann gleichermaßen zur Steuerung von Antriebssträngen mit Automatikgetriebe oder mit Handschaltgetriebe eingesetzt werden.

## Beschreibung

### Stand der Technik

Die Erfindung betrifft ein Verfahren und eine Vorrichtung zur Steuerung eines Antriebsstrangs eines Fahrzeugs nach dem Oberbegriff eines der nebengeordneten Ansprüche.

In modernen Antriebsstrangsteuerungen für Kraftfahrzeuge wird die Stellung des Fahrpedal elektronisch erfasst und in einer prozessorgesteuerten Schaltung ausgewertet, um einen Sollwert für das Antriebsmoment oder für die Antriebsleitstung vorzugeben. Bei der Berechnung des Sollwertes ist es wesentlich, den durch die Fahrpedalstellung vorgegeben Fahrerwunsch möglichst optimal unter Berücksichtigung der konkreten Betriebsbedingungen zu interpretieren.

Aus DE-A-196 93 324 ist ein Motorsteuerungssystem bekannt, das mittels eines Kennfeldes in Abhängigkeit von der Motordrehzahl und der Stellung des vom Fahrer des Fahrzeugs betätigten Fahrpedals ein relatives Motorausgangsmoment vorgibt. Unter Berücksichtigung des am aktuellen Betriebspunkt möglichen Momentenintervals des Motors wird daraus ein Sollwert für das Motormoment bestimmt. Dieses Verfahren bezieht sich lediglich auf eine Steuerung der Motorleistung, nicht jedoch auf eine Steuerung des gesamten Antriebsstrangs, bei der alle Komponenten, insbesondere Motor, Kupplung, Drehmomentenwandler und Getriebe berücksichtigt werden.

Eine Steuerung des ganzen Antriebsstranges wird in DE 198 60 645 vorgeschlagen. Dort soll in Abhängigkeit von der Fahrpedalstellung ein Sollwert für das einzustellende Antriebsmoment oder auch für die Antriebsleistung vorgeben werden. Dazu wird mittels einer elektronisch erfassten Fahrpedalstellung und eines daraus abgeleiteten Eingangswertes ein Sollwert gebildet, der positive und negative Werte annehmen kann, wobei der Nullpunkt die Grenze zwischen dem Zugbetriebszustand und dem Schubbetriebszustand (Zustand im Schleppbetrieb) markiert. Die Größe des Schubbetriebsbereichs kann durch eine Verschiebung des Nullpunktes in Abhängigkeit der Fahrgeschwindigkeit variiert werden. Durch die dort vorgeschlagene Antriebssteuerung wird eine besonders gute Anpassung des Antriebsmoments an den Fahrerwunsch und an die Betriebsbedingungen deshalb erreicht, weil dort der Sollwert in Abhängigkeit von einem vorgebbaren Intervall gebildet wird, dessen Intervallgrenzen die Maximal- und Minimalwerte für das einzustellende Antriebsmoment repräsentieren. Demnach wird in DE 198 60 645 ein Verfahren zur Steuerung des Antriebsstrangs eines Fahrzeugs mit einem vom Fahrer des Fahrzeugs betätigbaren Fahrpedals vorgeschlagen, bei dem abhängig von der Stellung des Fahrpedals ein Eingangswert ermittelt wird zur Bildung eines Sollwerts, der das Antriebsmoment für den Antriebstrang vorgibt, wobei das Vorzeichen des Sollwerts angibt, ob der Antriebsstrang in einem Zugbetriebszustand oder in einem Schubbetriebszustand gesteuert wird. Hinsichtlich des Steuerungsverhaltens beim Wechsel zwischen den Betriebszuständen könnte die vorgeschlagene Steuerung noch optimiert werden.

Es ist daher Aufgabe der Erfindung das eingangs genannte Verfahren und die eingangs genannte Vorrichtung so zu gestalten, dass der Übergang von einem Betriebszustand in den den anderen möglichst sanft und komfortabel erfolgt. Gelöst wird die Aufgabe durch ein Verfahren mit den Merkmalen des Anspruchs 1 sowie durch eine Vorrichtung mit den Merkmalen des nebengeordneten Anspruchs.

Demnach wird vorgeschlagen, dass mittels des Eingangswerts für den Zugbetriebszustand gemäß einer ersten Funktion ein erster Zwischenwert und für den Schubbetriebszustand gemäß einer zweiten Funktion ein zweiter Zwischenwert ermittelt werden, und dass anschließend mittels einer additiven Überlagerung der beiden Zwischenwerte der Sollwert für das Antriebsmoment gebildet wird.

Dadurch wird der Sollwert für das Antriebsmoment, insbesondere für das Summenradmomnet, mittels einer einheitlichen, zusammengesetzten Gesamtfunktion berechnet, welche auch im Übergangsbereich zwischen Zug- und Schubbetrieb kontinuierlich verläuft. Somit werden Unstetigkeiten im Momentenverlauf, insbesondere Momentensprünge, vermieden. Da die Gesamtfunktion aus zwei Funktionen zusammengesetzt ist, die für den einen oder den anderen Betriebsbereich ausgelegt wird, kann der Momentenverlauf im jeweiligen Bereich sehr einfach und schnell an die Betriebsbedingungen im Zugbetrieb bzw. Schubbetrieb optimal angepasst werden. Die Erfindung kann gleichfalls für Antriebsstränge mit Automatikgetriebe oder mit Handschaltgetriebe eingesetzt werden.

Besonders vorteilhafte Ausgestaltungen der Erfindung ergeben sich aus den Unteransprüchen. Demnach ist es besonders vorteilhaft, zur Steuerung eines z.B. mit einem Automatikgetriebe oder einem stufenlosen Getriebe ausgestatteten Antriebsstranges den Sollwert als Summenradmoment für die vom Antriebsstrang angetriebenen Räder des Fahrzeugs zu bilden, indem die Fahrzeuggeschwindigkeit erfasst und zusammen mit dem Eingangswert gemäß der ersten Funktion, die einem Kennlinienfeld für das Fahrverhalten entspricht, ausgewertet werden. Durch diese Maßnahmen wird ein Sollwert berechnet, der das gewünschte Moment an der Antriebsachse angibt, wodurch ein dem Fahrerwunsch und den konkreten Betriebsbedingungen optimal angepasstes Übersetzungsverhältnis sowie ggf. eine momenten-neutrale Schaltung erzielt werden können.

Zur Steuerung eines mit einem Handschaltgetriebe ausgestattenten Antriebsstranges ist es besonders vorteilhaft, wenn der Sollwert als Summenradmoment für die vom Antriebsstrang angetriebenen Räder des Fahrzeugs gebildet wird, indem die Motordrehzahl erfasst und zusammen mit dem Eingangswert gemäß einer anderen ersten Funktion ausgewertet werden, wobei entsprechend einem Kennlinienfeld für das Fahrverhalten zunächst ein Getriebeeingangsmoment bestimmt wird und anschließend dieses Getriebeeingangsmoment mittels der aktuellen Triebstrangübersetzung in das einzustellende Summenradmoment transformiert wird. Dadurch erhält der Fahrer wie bisher einen unmittelbaren Durchgriff auf das Motorverhalten.

Es ist zudem von besonderem Vorteil, wenn der Sollwert zusätzlich in Abhängigkeit von einem Intervall mit veränderlichen Intervallgrenzen gebildet wird, wobei die Intervallgrenzen Maximal- und Minimalwerte für das vorzugebende Antriebsmoment repräsentieren. Durch diese Maßnahmen werden eventuell fehlerhaft berechnete Sollwerte, die in Form von sog. Ausreissern auftreten, auf einen plausiblen Wertebereich hin begrenzt, was besonders zur Stabilisierung der Steuerung beiträgt.

Ein besonderer Vorteil ergibt sich, wenn der für die Berechnung des Sollwerts herangezogene Eingangswert durch Filterung eines Rohwerts, der die Stellung des Fahrpedals angibt, ermittelt wird, wobei die Filterung gemäß einer vorgebbaren Komfortfunktion durchgeführt wird, und wenn parallel zur Berechnung des Sollwerts anhand der Auswertung des ungefilterten Rohwerts die zusätzliche Berechnung eines Vorhaltewerts durchgeführt wird. Der so parallel berechnete Vorhaltewert steht sofort für eine schnelle erste Steuerung des Antriebsstranges zur Verfügung. Der präzisierte Sollwert kann anschließend für eine ggf. notwendige leichte Korrektur herangezogen werden. Damit wird die Gesamtreaktionszeit der Steuerung erheblich reduziert.

Außerdem ist es besonders vorteilhaft, wenn der Sollwert auf einen gesicherten Wert begrenzt wird, wobei die Begrenzung dann erfolgt, wenn der aktuelle Eingangswerte unterhalb einer vorgebbaren Plausibilitätsschwelle und die aktuelle Motordrehzahl oberhalb einer vorgebbaren Sicherheitsschwelle liegen. Durch diese Maßnahmen wird ausgeschlossen, dass eine zur ungewollten Beschleunigung des Fahrzeugs führende Sollwertvorgabe auftreten kann, falls sich das Fahrzeug in einem nicht sicher überwachbaren Betriebszustand befinden sollte.

Die Erfindung und die sich daraus ergebenden Vorteile werden nun anhand von zwei
Ausführungsbeispielen und mit Bezug auf die folgenden Zeichnungen näher beschrieben:
Fig. 1, die das Blockschaltbild für eine erstes Ausführungsbeispiel zeigt,Fig. 2a u. b, die schematische Detailschaltbilder dazu zeigen,
Fig. 3, die ein weiteres schematisches Detailschaltbild zeigt,
Fig. 4, in der Kennlinien für das Steuerungsverhalten wiedergegeben werden, und
Fig. 5, die das Blockschaltbild für ein zweites Ausführungsbeispiel.

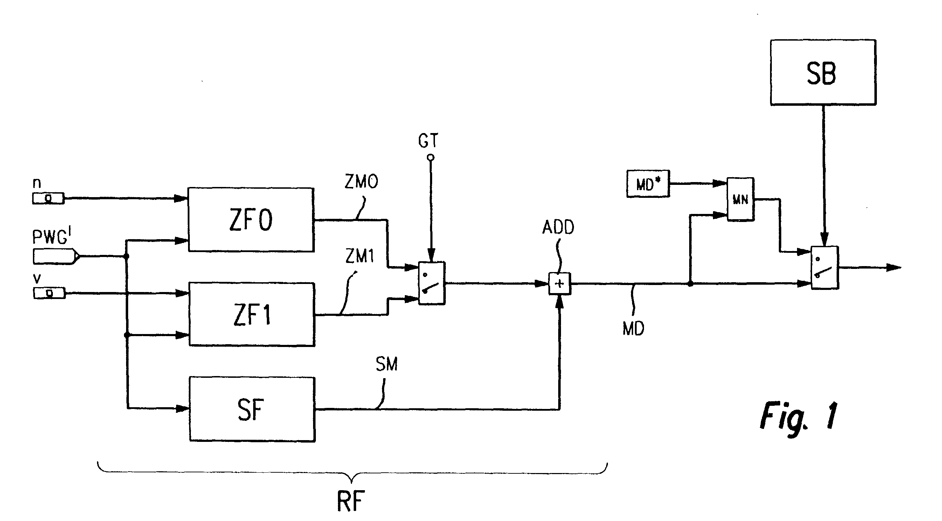

In der Figur 1 ist in Form eines Blockschaltbildes der Aufbau einer Vorrichtung gemäß einem ersten Ausführungsbeispiel schematisch dargestellt. Die Vorrichtung enthält Rechenmittel, die gemäß verschiedenen Funktionen ZF0, ZF1 oder SF Zwischenwerte ZM0, ZM1 bzw. SF berechnen und anschließend mittels additiver Verknüpfung ADD einen Sollwert MD bilden. Die Funktionen unterscheiden sich dabei wie folgt voneinander: Die ersten Funktionen ZFO und ZF1 sind dem Zugbetriebszustand zugeordnet, d.h. die erzeugten Zwischenwerte ZM0 bzw. ZM1 für das vorzugebende Antriebsmoment liegen vornehmlich in einem positven Wertebereich, damit der Antrieb eine Erhöhung der Fahrzeuggeschwindigkeit bewirkt. Dabei ist die Funktion ZF0 für den Fall optimiert, dass der Antrieb über ein Handschaltgetriebe erfolgt; die Funktion ZF1 hingegen ist für den Fall optimiert, dass der Antrieb über ein Automatikgetriebe mit koordinierter Triebstrangsteuerung erfolgt. Die zweite Funktion SF ist dem Schubbetriebszustand zugeordnet, d.h. der erzeugte Zwischenwert SM liegt in einem negativen Wertebereich, damit der Antrieb eine Verringerung der Fahrzeuggeschwindigkeit bewirkt.

Allen drei Funktionsblöcken ZF0, ZF1 und SF wird als Eingangswert ein Signal PWG' zugeführt, das ein nicht dargestellter elektronischer Schaltkreis aus der aktuellen Stellung des Fahrpedals ableitet. In diesem Ausführungsbeispiel handelt es sich um einen gefilterten Eingangswert PWG', der aus einem Rohwert gebildet wird. Daneben wird dem ersten Funktionsblock ZF0 noch die aktuelle Motordrehzahl n zugeführt, dem anderen ersten Funktionsblock ZF1 hingegen wird noch die aktuelle Fahrzeuggeschwindigkeit v zugeführt. In Abhängigkeit von dem Getriebetyp GT, der etwa bei der Fahrzeugendmontage vorgegeben wird, wird der gemäß der Funktion ZF0 für Handschaltgetriebe oder der gemäß der Funktion ZF1 für Automatikgetriebe erzeugte Zwischenwert ZM0 bzw. ZM1 zur weiteren Berechnung heran gezogen. In diesem Beipiel handelt es sich um eine Antrieb mit Automatikgetriebe, so dass der erste Zwischenwert ZM1 genommen und mit dem zweiten Zwischenwert SM, der gemäß der Funktion SF erzeugt wird, zusammen gefasst wird zu dem Sollwert MD. Die Funktionen werden später noch im Einzelnen genau beschrieben.

Wie anhand der Fig. 1, insbesondere anhand der Addierstufe ADD, zu sehen ist, werden aus der additiven Überlagerung von einer der ersten Funktionen ZF0 oder ZF1, die das Steuerungsverhalten für den Zugbetrieb angeben, mit der zweiten Funktion SF, die das Steuerungsverhalten für den Schubbetrieb angibt, eine resultierende Gesamtfunktion RF für den ganzen Steuerungsbereich gebildet und ein Sollwert MD erzeugt. Dieser Sollwert MD kann positive und negative Werte annehmen und gibt ein aus den Eingangswerten PWG', v oder n entsprechend der Gesamtfunktion RF berechnetes Summenradmoment an. Wie später noch genau beschrieben wird, hat die Gesamtfunktion RF im Übergangsbereich um den Momentennullpunkt einen stetigen und monotonen Funktionsverlauf, der einen besonders sanften Übergang zwischen Schub- und Zugbetrieb bewirkt.

Zur weiteren Verbesserung des Steuerungsverhaltens und um eine nicht realisierbare Anforderung an den gesteuerten Antriebsstrang zu verhindern, wird der Sollwert MD auf Sicherheitsbedingungen hin überprüft. Dazu wird in einer Sicherheitstufe SB geprüft, ob das Fahrzeug sich in einem nicht überwachbaren Betriebszustand befindet, indem festgestellt wird, ob der Eingangswert PWG' unterhalb einer Plausibilitätsschwelle liegt und ob die Motordrehzahl n eine Sicherheitsschwelle übersteigt. In diesem Fall wird der Sollwert MD für das berechnete Summenradmomnet auf einen Wert MD^{*} begrenzt. Dadurch wird eine zur ungewolten Beschleunigung führende Sowertvorgabe verhindert.

Die in Fig. 1 dargestellte Vorrichtung dient der Steuerung eines nicht dargestellten Antriebsstranges, dessen Aufbau an sich bekannt ist. Beipielsweise möge der Antriebsstrang aus folgenden Komponenten bestehen: aus einem Fahrzeugmotor, einem Drehmomentenwandler, der durch eine Wandlerbrückungskupplung überbrückbar ausgelegt ist, aus einem stufenlos verstellbaren Getriebe sowie aus Antriebsrädern mit einem Differentialgetriebe. Über nicht dargestellte Drehzahlsensoren wird die Motordrehzahl n erfasst und der Vorrichtung zugeführt. Die Fahrzeuggeschwindigkeit v wird aus der Drehzahl eines freilaufenden Rades berechnet und ebenfalls der Vorrichtung zugeführt. Weiterhin wird die momentane Stellung des vom Fahrer des Fahrzeugs betätigten Fahrpedals als Rohwert gemessen, beipielsweise über ein Potentiometer, und als gefilterter Eingangswert PWG' an die Vorrichtung übertragen.

Die erfindungsgemäße in der Fig. 1 gezeigte Vorrichtung berechnet aus den genannten Messwerten den Sollwert MD für das einzustellende Summenradmoment, d.h. das an der Antriebsseite der Antriebsachse einzustellende Moment. Dadurch kann ein dem Fahrerwunsch und den konkreten Betriebsbedingungen im Zug- oder Schubbetrieb optimal angepasstes Übersetzungsverhältnis des Getriebes gewählt werden. Die Vorrichtung ist auch für die Steuerung von Antrieben mit Handschaltgetrieben ausgelegt, so dass auch in diesem Fall die selbe Schnittstelle für den Sollwert MD verwendet werden kann. Die erfindungsgemäße Vorrichtung steuert den Antriebsstrang durch Steuersignale an die einzelnen Komponenten, insbesondere an den Fahrzeugmotor über eine vor Ort angeordnete Motorsteuerung, sowie an die Überbrücklungskupplung und an das Getriebe. Die Steuervorgänge an sich erfolgen nach üblichen Methoden, wie sie beipielsweise in DE 198 60 645 beschrieben sind. Der Kern der Erfindung, auf den nachfolgend noch näher eingegangen wird, ist auf das Verfahren, mit dem der Sollwert für das Antriebsmoment ermittelt wird und auf die danach arbeitende Vorrichtung gerichtet.

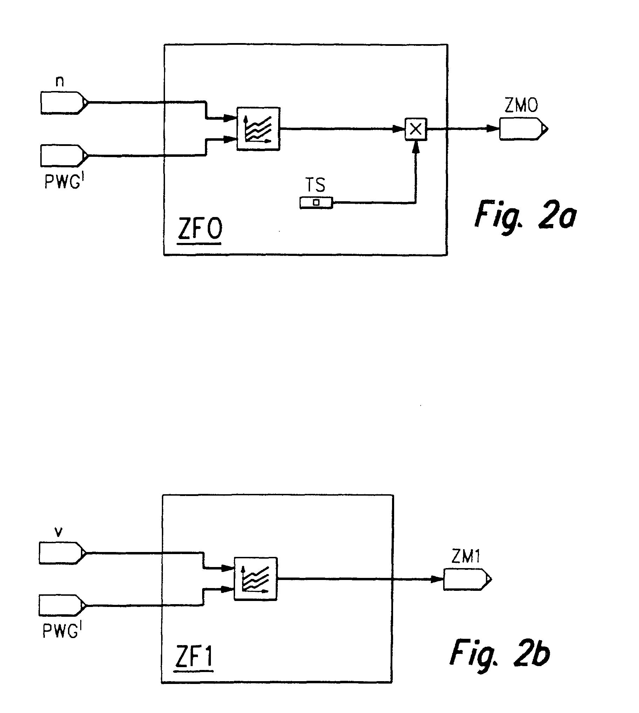

Die Fig. 2a und 2b zeigen im Detail die Funktionsweise der in Fig. 1 dargestellten Funktionsblöcke ZF0 bzw. ZF1, in denen die ersten Zwischenwerte ZM0 bzw. ZM1 für den Zugbetrieb berechnet werden.

In der Fig. 2a ist der Funktionsblock ZF0 dargestellt, der für einen mit Handschaltgetriebe ausgestatteten Antrieb ausgelegt ist. Der gefilterte Eingangswert PWG', der aus der momentanen Fahrpedalstellung abgeleitet ist, und die aktuelle Motordrehzahl n werden als Eingangsparameter für ein Kennfeld herangezogen, das mehrere Kennlinien enthält, aus denen dann das einzustellende Getriebemoment entsprechend dem typischen Fahrverhalten abgelesen werden kann. Durch anschließende Multiplikation des ermittelten Getriebemoments mit der gewählten Triebstrangübersetzung TS ergibt sich der gesuchte Zwischenwert ZMO für das bei Handschaltung im Zugbetrieb einzustellende Summenradmoment.

In der Fig. 2b ist der andere Funktionsblock ZF1 dargestellt, der für einen mit Automatikgetriebe ausgestatteten Antrieb ausgelegt ist. Nun werden der gefilterte Eingangswert PWG' und die aktuelle Fahrzeuggeschwindigkeit v als Eingangswerte herangezogen, diesmal für ein Kennfeld, aus dem entsprechend dem typischen Fahrverhalten der gesuchte Zwischenwert ZM1 für das bei Automatkgetriebe und im Zugbetrieb einzustellende Summenradmoment abgelesen wird. Die Kennfelder werden beispielsweise in Tabellenform als sogenannte "look-up table" gespeichert in einem Halbleiterspeicher, auf den die Rechenmittel zugreifen. Als Rechenmittel werden in diesem Beipiel Schaltungen mit digitalen Signalprozessoren, sog. DSP's, eingesetzt. Es ist aber auch denkbar, diskrete Logikschaltungen oder andere Rechenschaltungen zu verwenden.

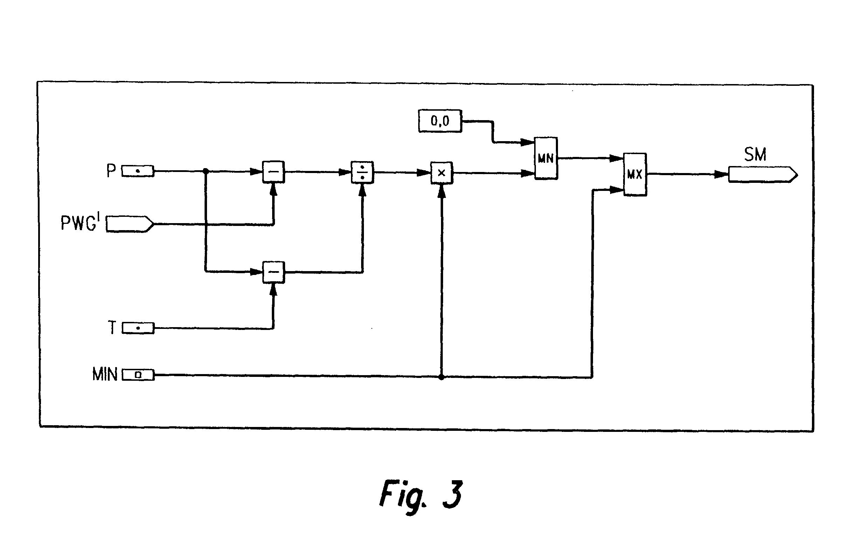

Die Fig. 3 zeigt im Detail den funktionellen Aufbau des in der Fig, 1 dargestellten Funktionsblocks SF, der für die Berechnung im Schubbetriebszustand ausgelegt ist. Der Funktionsblock SF bildet einen zweiten Zwischenwert SM durch Verknüpfung der folgenden Eingangswerte: die gefilterte Fahrpedalstellung PWG', ein Totpunktschwellwert T und ein Plausibilitätsschwellwert P für die Fahrpedalstellung sowie das vorgebbare minimale Radmoment MIN. Zunächst wird die Differenz aus dem Plausibilitätsschwellwert P und der gefilterten Fahrpedalstellung PWG gebildet. Ebenfalls wird die Differenz aus dem Plausibilitätsschwellwert P und dem Totpunktschwellwert T gebildet. Die erste Differenz wird danach durch die zweite Differenz dividiert. Das Divisionsergebnis wird mit dem minimalen Radmoment MIN multipliziert. Das Multiplikationsergebnis wird einer Minimalauswahl zugeführt, der des Weiteren der Wert 0.0 zugeführt ist. Danach wird das Ausgangssignal der Minimalauswahl einer Maximalauswahl zugeführt, die des Weiteren von dem minimalen Radmoment MIN beaufschlagt ist. Das Ausgangssignal der Maximalauswahl stellt den zweiten Zwischenwert SM dar.

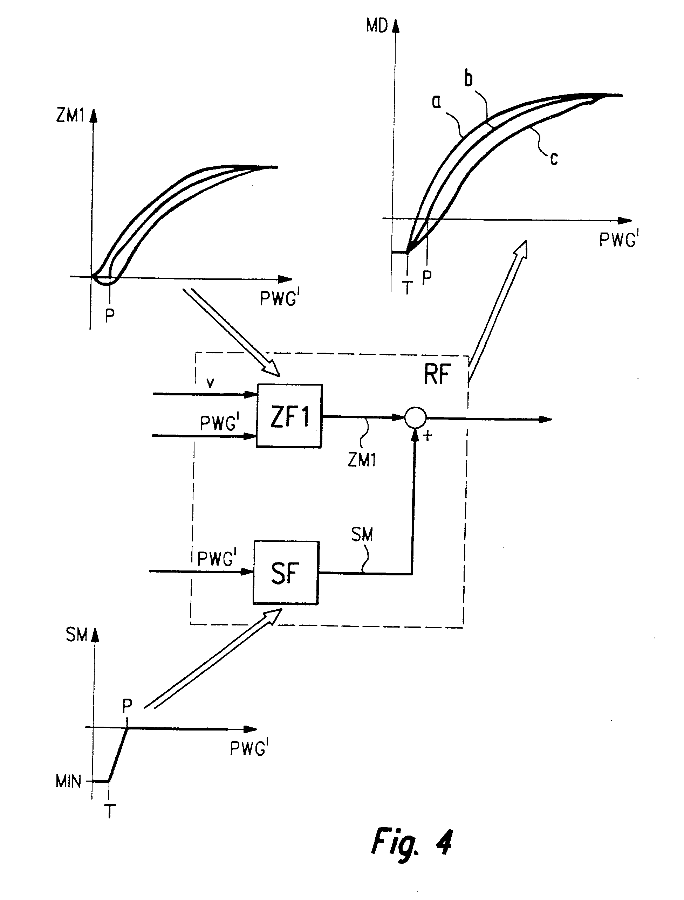

Die weitere Beschreibung geht von einem Antriebsstrang aus, der ein Automatikgetriebe enthält, was jedoch keine Beschränkung der Anwendung der Erfindung auf diesen Anwendungsfall bedeuten soll. Es wird also für den Zugbetrieb die in der Fig. 1 dargestellte Funktion ZF1 verwendet, die Funktion ZF0 hingegen wird hier nicht verwendet. Nun ist in der Fig. 4 schematisch die Überlagerung von der ersten Funktion ZF1 für den Zugbetrieb und der zweiten Funktion SF für den Schubbetrieb dargestellt. Die erste Funktion wird durch einen entsprechenden Funktionsblock ZF1 repräsentiert, der gemäß dem bereits beschriebenen Schritten aus den Eingangswerten PWG' und v einen ersten Zwischenwert ZM1 für den Zugbetrieb berechnet. Das dazu verwendete Kennlinienfeld ist schematisch in der Fig. 4, oben links dargestellt. Dort sind beipielsweise drei Kennlinien für jeweils eine Fahrzeuggeschwindigkeit gezeichnet. Demnach ergeben sich kleinere Sollwerte bei höheren Fahrgeschwindigkeiten v. Die für den Zugbetrieb errechneten Sollwerte (Zwischenwerte ZM1) haben fast auschließlich alle ein positives Vorzeichen.

Hingegen werden für den Schubbetrieb durchweg negative Sollwerte (Zwischenwerte SM) gemäß der zweiten Funktion SF berechnet, deren Verlauf in der Fig.4 unten links dargestellt ist. Wie dort für den Fall PWG'<T zu sehen ist, entspricht der Sollwert einem Wert MIN, der das minimale negative Radmoment angibt. Mit steigendem Einganswert PWG', d.h. mit Betätigung des Fahrpedals, steigt proportional dazu auch der negative Sollwert bis er den Wert Null erreicht. Das ist dann der Fall, wenn der Eingansgwert PWG' gleich dem Plausibilitätsschwellwert P ist. Für größere Werte von PWG' bleibt der Sollwert (Zwischenwert SM) auf dem Wert Null.

Durch additive Verknüpfung der beiden Funktionen ZF1 und SF wird nun eine Gesamtfunktion RF gebildet, deren Verlauf in der Fig. 4, oben rechts dargestellt ist. Wie dort zu sehen ist, gilt die Gesamtfunktion RF sowohl für den Zugbetriebsbereich als auch für den Schubbetriebsbereich. Dabei ist hervorzuheben, dass ein kontinuierlicher und sanfter Übergang zwischen den beiden Bereichen erzielt wird, so wie es beispielhaft anhand der drei Kennlinien a, b und c dargestellt ist. Die Kennlinie a gibt das Steuerverhalten für ein geringe Fahrgeschwindigkeit an, die Kennlinie b für eine mittlere Fahrgeschwindigkeit an und die Kennlinie für eine hohe Fahrgeschwindigkeit an. Abhängig von der Fahrgeschwindigkeit v kann durch positive oder negative Sollwerte der resultierende Nullpunkt verschoben werden, wobei folgende Anforderungen zu berücksichtigen sind:

Wenn die aktuelle Motordrehzahl oberhalb der Sicherheitsschwelle liegt, dann muss die Fahrpedalstellung PWG' größer als die Plausibilitätsschwelle P sein. Die Nullpunktlage kann für eine steigende Fahrgeschwindigkeit v weiter in Richtung größerer Sollwerte MD verschoben werden, wodurch ein frühe Motorbremsfunktion erreicht wird, sobald das Fahrpedal vom Fahrer zurück genommen wird (Gas wegnehmen). Liegt die aktuelle Motordrehzahl unterhalb der Sicherheitsschwelle, so kann die Fahrpedalstellung PWG' auch unterhalb der Plausibilitätsschwelle P liegen. Dies gilt besonders für geringe Fahrgeschwindigkeiten v (siehe Kennlinie a). Dadurch kann eine Verbesserung des Anfahrverhaltens erzielt werden, die sich besonders durch einen sofortigen Momentenaufbau bei geringer Fahrpedalbetätigung auszeichnet.

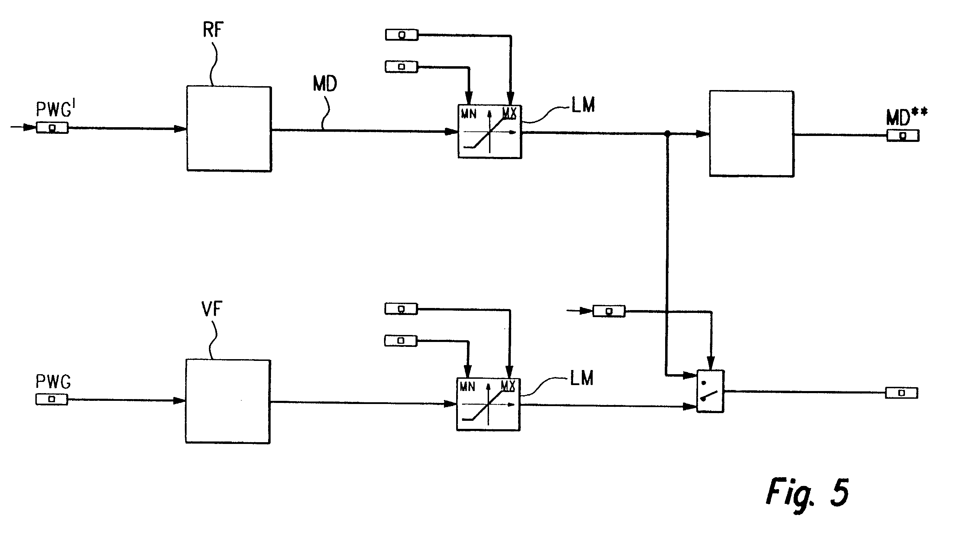

Die Fig. 5 zeigt ein zweites Ausführungsbeispiel der Erfindung, bei dem parallel zu der zuvor beschriebenen Berechnung des Sollwertes nun auch ein Vorhaltewert ermittelt wird. Durch diese Maßnahme werden eine schnellere Erkennung des Fahrerwunsches und somit eine Verkürzung der Steuerzeiten erzielt. Zur weiteren Optimierung des Steuerungsverhaltens wird zusätzlich eine Begrenzung der berechneten Sollwerte durchgeführt.

Der Sollwert MD wird aus dem Eingangswert PWG' wie zuvor beschrieben gemäß der Gesamtfunktion RF berechnet. Dann folgt eine Begrenzung LM des Sollwertes durch veränderliche Intervallgrenzen, die ein Intervall definieren, so wie es in DE 198 60 645 beschrieben ist. Anschließend erfolgt eine Transformation mittels einer Komfortfunktion in einen Sollwert MD^{**}.

Parallel dazu wird auch ein Vorhaltewert berechnet: Ausgehend von dem Rohwert PWG für die Fahrpedalstellung wird entsprechend einer Vorhaltefunktion VF, die ähnlich der Gesamtfunktion RF sein kann, ein Vorhaltewert berechnet, der ebenfalls einer Begrenzung LM unterzogen wird. Liegt nun ein Fehler oder eine Verzögerung bei der Ermitlung der gefilterten Fahrpedalstellung PWG' vor, so wird der Vorhaltewert zur Steuerung des Antriebs verwendet. Liegt jedoch ein berechneter Sollwert MD an, so wird dieser zur Steuerung des Antriebsstranges benutzt. Dadurch ist jederzeit eine sichere und schnelle Steuerung des Antriebsstranges gegeben.

Die Erfindung ist besonders geeignet zur Steuerung von Antriebssträngen in Kraftfahrzeugen, was jedoch eine Anwendung auf andere Fahrzeugarten nicht ausschließt.

## Patentansprüche

1. Verfahren zur Steuerung des Antriebsstrangs eines Fahrzeugs mit einem vom Fahrer des Fahrzeugs betätigbaren Fahrpedal, bei dem abhängig von der Stellung des Fahrpedals ein Eingangswert (PWG') ermittelt wird zur Bildung eines Sollwerts (MD), der das Antriebsmoment für den Antriebsstrang vorgibt, wobei das Vorzeichen des Sollwerts (MD) angibt, ob der Antriebsstrang in einem Zugbetriebszustand oder in einem Schubbetriebszustand gesteuert wird, **dadurch gekennzeichnet, dass** mittels des Eingangswerts (PWG') für den Zugbetriebszustand gemäß einer ersten Funktion (ZF1) ein erster Zwischenwert (ZM1) und für den Schubbetriebszustand gemäß einer zweiten Funktion (SF) ein zweiter Zwischenwert (SM) ermittelt werden, und dass anschließend mittels einer additiven Überlagerung (ADD) der beiden Zwischenwerte (ZM1, SM) der Sollwert (MD) für das Antriebsmoment gebildet wird.

2. Verfahren nach Anspruch 1 zur Steuerung eines mit einem Automatikgetriebe ausgestatteten Antriebsstranges, **dadurch gekennzeichnet, dass** der Sollwert (MD) als Summenradmoment für die vom Antriebsstrang angetriebenen Räder des Fahrzeugs gebildet wird, indem die Fahrzeuggeschwindigkeit (v) erfasst und zusammen mit dem Eingangswert (PWG') gemäß der ersten Funktion (ZF1), die einem Kennlinienfeld für das Fahrverhalten entspricht, ausgewertet werden.

3. Verfahren nach Anspruch 1 zur Steuerung eines mit einem Handschaltgetriebe ausgestatteten Antriebsstranges, **dadurch gekennzeichnet, dass** der Sollwert (MD) als Summenradmoment für die vom Antriebsstrang angetriebenen Räder des Fahrzeugs gebildet wird, indem die Motordrehzahl (n) erfasst und zusammen mit dem Eingangswert (PWG') gemäß einer anderen ersten Funktion (ZF0) ausgewertet werden, wobei entsprechend einem Kennlinienfeld für das Fahrverhalten zunächst ein Getriebeeingangsmoment bestimmt wird und anschließend dieses Getriebeeingangsmoment mittels der aktuellen Triebstrangübersetzung in das Summenradmoment transformiert wird.

4. Verfahren nach einem der vorhergehenden Ansprüche, **dadurch gekennzeichnet, dass** der Sollwert (MD) zusätzlich in Abhängigkeit von einem Intervall mit veränderlichen Intervallgrenzen gebildet wird, wobei die Intervallgrenzen Maximal- und Minimalwerte für das vorzugebende Antriebsmoment repräsentieren.

5. Verfahren nach einem der vorhergehenden Ansprüche, **dadurch gekennzeichnet, dass** der für die Berechnung des Sollwerts (MD) herangezogene Eingangswert (PWG') durch Filterung eines Rohwerts (PWG), der die Stellung des Fahrpedals angibt, ermittelt wird, wobei die Filterung gemäß einer vorgebbaren Komfortfunktion durchgeführt wird, und dass parallel zur Berechnung des Sollwerts (MD) anhand der Auswertung des ungefilterten Rohwerts (PWG) die zusätzliche Berechnung eines Vorhaltewerts durchgeführt wird.

6. Verfahren nach einem der vorhergehenden Ansprüche, **dadurch gekennzeichnet, dass** der Sollwert auf einen gesicherten Wert (MD^{*}) begrenzt wird, wobei eine Begrenzung (SB) dann erfolgt, wenn der aktuelle Eingangswerte (PWG') unterhalb einer vorgebbaren Plausibilitätsschwelle (P) und die aktuelle Motordrehzahl (n) oberhalb einer vorgebbaren Sicherheitsschwelle liegen.

7. Vorrichtung zur Steuerung des Antriebsstrangs eines Fahrzeugs mit einem vom Fahrer des Fahrzeugs betätigbaren Fahrpedal mit elektronischen Schaltkreisen, die abhängig von der Stellung des Fahrpedals einen Eingangswert (PWG') zur Bildung eines Sollwerts (MD) ermitteln, der das Antriebsmoment für den Antriebsstrang vorgibt, wobei das Vorzeichen des Sollwerts (MD) angibt, ob der Antriebsstrang in einem Zugbetriebszustand oder in einem Schubbetriebszustand gesteuert wird, **dadurch gekennzeichnet, dass** die Vorrichtung mit den Schaltkreisen verbundene Rechenmittel enthält, die mittels des Eingangswertes (PWG') für den Zugbetriebszustand gemäß einer ersten Funktion (ZF1) einen ersten Zwischenwert (ZM1) und für den Schubbetriebszustand gemäß einer zweiten Funktion (SF) einen zweiten Zwischenwert (SM) ermitteln, und die anschließend mittels einer additiven Überlagerung (ADD) der beiden Zwischenwerte (ZM1, SM) den Sollwert (MD) für das Antriebsmoment berechnen.

8. Vorrichtung nach Anspruch 7 zur Steuerung eines mit einem Automatikgetriebe ausgestattenten Antriebsstranges, **dadurch gekennzeichnet, dass** die Vorrichtung mit Mitteln zum Erfassen der Fahrzeuggeschwindigkeit (v) verbunden ist, und dass die Rechenmittel den Sollwert (MD) als Summenradmoment für die vom Antriebsstrang angetriebenen Räder des Fahrzeugs berechnen, indem sie die Fahrzeuggeschwindigkeit (v) zusammen mit dem Eingangswert (PWG') gemäß der ersten Funktion (ZF1), die einem Kennlinienfeld für das Fahrverhalten entspricht, auswerten.

9. Vorrichtung nach Anspruch 7 zur Steuerung eines mit einem Handschaltgetriebe ausgestattenten Antriebsstranges, **dadurch gekennzeichnet, dass** die Vorrichtung mit Mitteln zum Erfassen der Motordrehzahl (n) verbunden ist, und dass die Rechenmittel den Sollwert (MD) als Summenradmoment für die vom Antriebsstrang angetriebenen Räder des Fahrzeugs berechnen, indem sie die Motordrehzahl (n) zusammen mit dem Eingangswert (PWG') gemäß einer anderen ersten Funktion (ZF0) auswerten, wobei die Rechenmittel entsprechend einem Kennlinienfeld für das Fahrverhalten zunächst ein Getriebeeingangsmoment bestimmen und anschließend dieses Getriebeeingangsmoment mittels der aktuellen Triebstrangübersetzung in das Summenradmoment transformieren.

10. Vorrichtung nach einem der Ansprüche 7 bis 9, **dadurch gekennzeichnet, dass** die Vorrichtung eine Begrenzerstufe (LM) enthält, die den Sollwert (MD) zusätzlich in Abhängigkeit von einem Intervall mit vorgebbaren Intervallgrenzen begrenzt, wobei die Intervallgrenzen Maximal- und Minimalwerte für das vorzugebende Antriebsmoment repräsentieren.

11. Vorrichtung nach einem der Ansprüche 7 bis 10, **dadurch gekennzeichnet, dass** die Vorrichtung eine Filterstufe enthält, die den für die Berechnung des Sollwerts (MD) herangezogenen Eingangswert (PWG') durch Filterung eines Rohwerts (PWG), der die Stellung des Fahrpedals unmittelbar angibt, bildet, wobei die Filterstufe gemäß einer vorgebbaren Komfortfunktion ausgelegt ist, und dass die Rechenmittel parallel zur Berechnung des Sollwerts (MD) die zusätzliche Berechnung eines Vorhaltewerts durchführen anhand der Auswertung des ungefilterten Rohwerts.

12. Vorrichtung nach einem der Ansprüche 7 bis 11, **dadurch gekennzeichnet, dass** die Vorrichtung eine Sicherheitstufe enthält, die den Sollwert auf einen gesicherten Wert (MD^{*}) begrenzt, wobei die Sicherheitsstufe eine Begrenzung (SB) dann durchführt, wenn der aktuelle Eingangswerte (PWG') unterhalb einer vorgebbaren Plausibilitätsschwelle (P) und die aktuelle Motordrehzahl (n) oberhalb einer vorgebbaren Sicherheitsschwelle liegen.
